# EUROPÄISCHE PATENTSCHRIFT

(11) **EP 0 855 009 B1**
(45) Veröffentlichungstag und Bekanntmachung des Hinweises auf die Patenterteilung: **27.09.2000**
(21) Anmeldenummer: 96938963.4
(22) Anmeldetag: 14.10.1996
(51) Int. Cl.: F25B 15/06, F25B 15/12

(54) **SORPTIONSWÄRMEWANDLERANLAGE MIT ZUSATZKOMPONENTEN**
SORPTION HEAT CONVERTER SYSTEM WITH ADDITIONAL COMPONENTS
CONVERTISSEUR THERMIQUE PAR SORPTION DOTE DE COMPOSANTS SUPPLEMENTAIRES

(30) Priorität: 14.10.1995 DE 29516319 U
(43) Veröffentlichungstag der Anmeldung: 29.07.1998
(73) Patentinhaber: Riesch, Peter, 83646 Bad Tölz (DE)
(72) Erfinder: Riesch, Peter, 83646 Bad Tölz (DE)
(74) Vertreter: Winter, Brandl, Fürniss, Hübner, Röss, Kaiser, Polte Partnerschaft
(86) Internationale Anmeldenummer: DE9601954
(87) Internationale Veröffentlichungsnummer: WO9714923

(56) Entgegenhaltungen:
- WO-A-95/25934
- DE-A- 3 633 994
- DE-C- 960 996
- DE-C- 3 536 953
- US-A- 2 003 310
- US-A- 4 164 128
- US-A- 4 315 411
- US-A- 4 413 479
- US-A- 4 475 352
- US-A- 4 877 080
- US-A- 4 986 079
- US-A- 5 157 942

## Beschreibung

Die Erfindung betrifft eine Sorptionswärmewandleranlage entsprechend dem Oberbegriff im Anspruch 1, im folgenden kurz Sorptionsanlage genannt, die in ein- oder mehrstufigen Ausführungen als Kältemaschine, Wärmepumpe und Wärmetransformator oder Kombinationen aus diesen zur Kälte- und/oder Wärmeerzeugung eingesetzt wird (G.Alefeld, R.Radermacher: Heat Conversion Systems, CRC Press, Boca Raton (1994)). Sorptionswärmewandleranlagen sind auch beschrieben in Niebergall, W: Handbuch der Kältetechnik, Band 7, Sorptionskältemaschinen, Springer Berlin New York, Reprint (1981), und in H.v.Cube, F.Steimle: Wärmepumpen, VDI-Verlag Düsseldorf (1984). Entscheidend für die Kennzahlen der Sorptionsanlage ist die Summe aller reziproken Wärmedurchgangszahlen an den eingesetzen Hauptkomponenten: Verdampfer, Absorber, Kondensator, Generator, Desorber, Resorber (P.Riesch, G.Alefeld, DKV-Tagungsberichte, 17. Jahrgang Heidelberg, S569 ff (1990)). Insbesondere der Absorber und Resorber benötigen relativ grosse Wärmetauscherflächen, die auf den schlechten Stoffübergang bei der Absorption zurückzuführen sind. Dabei sind Turbulenzen in der Lösung für die Durchmischung der Lösung und damit für den Stoff- und Wärmeübergang im Absorber oder Resorber, ebenso wie beim Sieden im Verdampfer. Generator oder Desorber von größter Wichtigkeit. Turbulenzen beim Stoff- und Wärmeübergang werden durch hohe Leistungsumsätze pro Wärmetauscherfläche, d.h. durch hohe Flächenbelastungen erreicht. Im folgenden werden unter dem Oberbegriff Absorptionswärmetauscher diabate, d.h. gekühlte Absorber und Resorber verstanden, wie zB. Rieselabsorber, auch Fallfilmabsorber genannt, mit zB. Rohrbündel- oder Plattenwärmetauschem, Tauchabsorber, auch Blasenabsorber genannt, mit zB. Rohrschlangen- oder Plattenwärmetauschern, usw. (siehe zB. Niebergall, W: Handbuch der Kältetechnik, Band 7, Sorptionskältemaschinen, Springer Berlin, Reprint (1981),S379ff).

Es ist bekannt, daß sich der Wärmeübergang in Absorptionswärmetauschern zB. durch strukturierte Rohre (N.Isshiki, K.Ogawa, Proc. Munich Discussion Meeting on Absorption Heat Transfer Enhancement (1994)) oder durch Zusätze, zB. von Octanol (Y.Nagaoka. et al., Proc. XVII Int.Congress of Refrigeration Vol.B, pp.636, Vienna (1987)) verbessern lässt. Eine gute Diskussion über Wärmeübergänge in Absorbern ist in der nachveröffentlichten Dissertation von F.Summerer (TU München, S65, 1996) gegeben. Der Wärmeübergang zwischen Lösung und Kühlmedium begrenzt im allgemeinen aber nicht den Absorptionsvorgang, dieser ist begrenzt durch den Stoffübergang. Eine grosse Wärmetauscherfläche im Absorber/Resorber zur Verbesserung des Stoffübergangs durch eine grosse Oberfläche verteuert die Kosten des Absorbers und schafft Benetzungsprobleme am Wärmetauscher (J.Tang et al., 18th Int. Congress of Refrigeration, Montreal, p.519 (1991); I.Greiter, Dissertation TU München (1995), S36-37). Für einen guten Wärmeübergang ist eine vollständige Benetzung des Wärmetauschers notwendig. Zudem nehmen beispielsweise bei grossen Wärmetauscherflächen oder niedrigen Antriebstemperaturen und damit niedrigem Leistungsumsatz pro Wärmetauscherfläche (kurz Flächenbelastung) die Turbulenzen in der Lösung im Absorptionswärmetauscher und die Wirkung der wärmeübergangssteigernden Additive relativ stark ab (K.J.Kim, Dissertation Arizona State University (1992), pp.150). Niedrige Flächenbelastungen im Absorptionswärmetauscher wirken sich auch nachteilig auf die Flächenbelastungen in den anderen Hauptkomponenten aus und können zu relativ grossen spezifischen Wärmetauscherflächen der Gesamtanlage führen und damit zu hohen Kosten der Anlage.

Es ist ferner bekannt, wie oben bereits erwähnt, daß z.B. die bei niedrigen Antriebstemperaturen notwendigen grossen Tauscherflächen in Sorptionsanlagen mit Absorptionswärmetauschern, ausgebildet zB. als Rieselabsorber, Benetzungsprobleme auftreten. Diesen Problemen wird entweder unter Abnahme des Anlagenwirkungsgrades durch Erhöhung des Lösungsumlaufes zwischen Absorber und entsprechendem Generator oder auch durch Rezirkulation am Absorber entgegengewirkt (H.v.Cube, F.Steimle: Wärmepumpen, VDI-Verlag Düsseldorf (1984), S195; US-PS 4,315,411). Bei der Rezirkulation am Absorber wird die Lösung, die aufgrund der durch den Stoffübergang begrenzten Absorption unterkühlt am Sammler des Absorptionswärmetauschers austritt, zurück zur Verteilvorrichtung des Absorptionswärmetauschers gepumpt. Insbesondere Sorptionsanlagen mittlerer und kleiner Leistung mit Absorptionswärmetauschern mit kleiner Rohrbündelhöhe benötigen eine hohe Rezirkulation für eine vollständige Benetzung. In Hinblick auf ein möglichst hohes Temperaturniveau für die Auskopplung der Absorptionswärme und für die Wärmeübertragung am Absorptionswärmetauscher wirkt sich eine hohe Rezirkulation nachteilig aus, da die für die Wärmeübertragung zur Verfügung stehende treibende Temperaturdifferenz um den Temperaturunterschied zwischen arbeitsmittelarmer und - reicher Lösung verringert wird (I.Greiter, Dissertation TU München (1995), S36-37).

Aus DE 960 996 C ist eine Sorptionskälteanlage bekannt, die ein aus drei einzelnen Absorbern bestehendes Absorbersystem oder Absorberkaskade umfaßt. Der dritte Absorber ist hierbei zusätzlich als Lösungsmittelspeicher ausgebildet. Aus dem dritten Absorber bzw. aus dem Lösungsmittelspeicher abgezogenes Lösungsmittel kann über einen Rezirkulationskreis mit Pumpe in den ersten Absorber eingespeist werden. Durch diese Ausbildung des dritten Absorbers als Lösungsmittelspeicher kann dem Rezirkulationskreis auch Kälteleistung bereitgestellt werden, wenn keine Antriebswärme vorliegt.

Eine weitere bekannte Massnahme entkoppelt den Stoff- und Wärmeübergang in Absorbern/Resorbern durch Verwendung von adiabaten Absorbern (W.A.Ryan, Proc.Int. Absorption Heat Pump Conference, New Orleans, AES-Vol.31, p155, (1994); US-PS 4,475,352). Dadurch kann die für den Stoffübergang erforderliche grosse Oberfläche zur Verfügung gestellt werden, ohne gtosse Wärmetauscherflächen zu benötigen. Der Wärmetausch wird getrennt in einem Kühler im Rezirkulationskreis durchgeführt. Nachteilig bei adiabaten Absorbern ist, dass die Absorptionswärme beim Stoffübergang zu einer relativ starken Erwärmung der Lösung im Absorber führt, da die spezifische Absorptionswärme sehr gross ist im Vergleich zur spezifischen Wärmekapazität der Lösung. Das erfordert einen hohen Rezirkulationsumlauf und/oder eine starke Unterkühlung der Lösung und damit eine grosse treibende Temperaturdifferenz zwischen Kühlwasser und Absorptionstemperatur im adiabaten Absorber mit all den damit verbunden Nachteilen, wie hohe Antriebstemperaturen, Verlust an Temperaturhub, usw. (F.Summerer, Dissertation, TU München S83, 1996). Gemeinsam haben die oben erläuterten Massnahmen zur Verbesserung der Absorption, dass möglichst grosse Oberflächen für den die Absorption begrenzenden Stoffübergang zur Verfügung gestellt werden. Das wird erreicht durch grosse Absorptionswärmetauscherflächen, zB. als Rohrbündel, oder in adiabaten Absorbern zB. durch Füllkörper.

Die Erfindung hat sich zur Aufgabe gemacht, durch Verbesserung des Stoff- und Wärmeübergangs im Absorber und/oder Resorber die Leistungsmerkmale von Sorptionsanlagen durch kostengünstige Massnahnen zu verbessern.

Erfindungsgemäß wird die Aufgabe durch die Merkmale gemäß Anspruch 1 gelöst.

Demnach wird für die Sorptionsanlage zumindest ein gekühlter, also nichtadiabater Absorptionswärmetauscher als Absorber und/oder Resorber eingesetzt, wobei als zusätzliche Komponenten zumindest ein Lösungskühler und eine Pumpe in einen Rezirkulationskreis geschaltet werden. Die am Absorptionswärmetauscher austretende arbeitsmittelreiche, unterkühlte Lösung wird über zumindest eine Pumpe und zumindest einen Lösungskühler dem Eingang des Absorptionswärmetauschers zumindest teilweise wieder zugeführt. Die erfindungsgemässe Anordnung verfolgt das Konzept durch starke Unterkühlung der Lösung einen guten Stoffübergang im Absorptionswärmetauscher zu erreichen. Durch den mit dieser Massnahme erzielbaren grossen Gradienten, zwischen dem Dampfdruck zB. des absorbierenden Rieselfilms im Absorptionswärmetauscher und dem vom Verdampfer im Absorptionswärmetauscher hervorgerufenen Dampfdruck, werden Turbulenzen in der Lösung beim Absorbieren gefördert. Die Turbulenzen tragen zu einer besseren Durchmischung der Lösung im Absorptionswärmetauscher bei, in der überlagert sowohl Temperatur- als auch Konzentrationsgradienten auftreten. Dies wirkt sich vorteilhaft auf den Stoff- und Wärmeübergang im Absorptionswärmetauscher aus und damit auf die Leistungsmerkmale der Sorptionsanlage. Die starke Unterkühlung der Lösung bei gegebener Kühlwassertemperatur wird mit einem Lösungskühler, zB. Flüssigkeits/Flüssigkeitswärmetauscher, im Rezirkulationskreis erreicht. Die k-Werte eines Lösungskühlers mit bis zu 5000 W/m²K liegen deutlich über denen eines Absorptionswärmetauschers mit k-Werten zwischen 500-2000 W/m²K. Im Gegensatz zu der oben erwähnten Rezirkulation, dient die Rezirkulation hier nicht hauptsächlich zur Sicherstellung der Benetzung oder zur Teillastregelung, sondern der nach Anspruch 1 gebildete Lösungskreis dient in erster Linie zum Umlauf der Lösung durch den Lösungskühler und damit zur Unterkühlung der Lösung bzw. zum turbulenteren Stoff- und Wärmeübergang im Absorptionswärmetauscher. Die Anordnung Absorptionswärmetauscher mit Lösungskühler ist ein System, das durch ihr Zusammenwirken die Verbesserung des Stoff- und Wärmeübergangs bei der Absorption im Absorptionswärmetauscher erreicht. Die Wirkung und die erzielbaren Vorteile ergeben sich nicht einfach aus der Summe der Wirkung der Einzelelemente, Lösungskühler und Absorptionswärmetauscher.

Das Zusammenwirken von Absorptionswärmetauscher und Lösungskühler eröffnet unter anderem folgende technische Möglichkeiten und Vorteile, die ohne Lösungskühler nicht realisierbar wären:
- Die teueren Wärmetauscherflächen im Absorber/Resorber, zB. Rohrbündelwärmetauscher, können nach diesem Konzept vorteilhaft kleiner dimensioniert werden, der Lösungskühler als Flüssigkeits/Flüssigkeitswärmetauscher ist kompakt, sehr effizient und kostengünstig herstellbar, zB. als Plattenwärmetauscher.
- Durch den verbesserten Stoff- und Wärmeübergang kann bei sonst unveränderten Bedingungen die bei der Absorption frei werdende Wärme das Kühlwasser auf eine höhere Temperatur erwärmen. Das erlaubt vorteilhaft, den Kühlmediumstrom durch Absorptionswärmetauscher und Lösungskühler zu reduzieren und/oder die Abwärmen aus dem Absorptionswärmetauscher und Lösungskühler bei höherer Temperatur abzugeben, zB. für Heizzwecke.
- Wie oben erwähnt, lässt sich bei gegebener Leistung die Kühlwassertemperatur erhöhen, was zB. unter bestimmten Bedingungen einen wirtschaftlichen Einsatz von direkter Luftkühlung oder von Trockenrückkühlwerken erlaubt.
- Zudem können Stoffpaare zum Einsatz kommen, die zB. bei Verwendung von Absorptionswärmetauschern allein einen zu schlechten Wärmeübergang besitzen, zB. aufgrund ihrer hohen Viskosität.
- Bei gegebener Kühlmediumtemperatur lässt sich der Dampfdruck im Absorber senken, wodurch sich vorteilhaft die Verdampfertemperatur zur Kälteerzeugung absenken lässt.
- Analog lässt sich die Antriebstemperatur bei ein- und mehrstufigen Anlagen absenken aufgrund des guten Stoff- und Wärmeübergangs im Absorptionswärmetauscher mit Lösungskühler. Das ermöglicht unter anderem eine effiziente Nutzung von Niedertemperaturwärme als Antriebswärme z.B. Abwärme oder Niedertemperaturwärme aus Fernwärme, Motoren, Solarkollektoren.

Im Fall zweistufiger Sorptionskältemaschinen mit hohem Wirkungsgrad kann die Antriebstemperatur auf ca. 130° C abgesenkt werden. Bisher konnten z.B. mit dieser Temperatur nur einstufige Sorptionskältemaschinen wirtschaftlich betrieben werden. Durch die Möglichkeit mit 130°C auch eine zweistufige Sorptionskälteanlage mit hohem Wirkungsgrad zu betreiben, erhöht sich die Kältezahl von 0.7 auf 1.2, wodurch die Anlage z.B. auch in Niederdruck-Dampfnetzen effizient und vorteilhaft einsetzbar ist.

Erfindungsgemäss kann bei einer dreistufigen Sorptionskältemaschine mit hohem Wirkungsgrad die Antriebstemperatur im Hochdruck-Generator auf ca. 150° C abgesenkt werden. Bisher konnten bei dieser Temperatur nur zweistufige Kältemaschinen betrieben werden. Eine Steigerung der Temperatur im Hochdruck-Generator auf über 160° C ist wegen ungeklärten Fragen bzgl. Korrosionsinhibitoren und Materialwahl technisch nicht realisierbar. Aufgrund der hohen Kältezahl von 1.6 bei dreistufigen Sorptionskälteanlagen sind diese selbst bei direkter Befeuerung mit Öl oder Gas primärenergetisch gleichwertig zu Kompressorkälteanlagen.

-Auch werden die Nachteile eines Absorberwärmetauschers mit Rezirkulationkreis, der keinen Lösungskühler enthält, bzw. eines adiabaten Absorbers deutlich verringert und eine vorteilhaft niedrige treibende Temperaturdifferenz beim Wärmeübergang erreicht. Insbesondere kann durch Kombination von Lösungskühler und Absorptionswärmetauscher nach Anspruch 1 in der Anlage die Flächenbelastung des Absorptionswärmetauschers vorteilhaft bei einem hohen Wert eingestellt werden, was insbesondere von entscheidendem Vorteil in Bezug auf die niedrigen Antriebs- oder Kältetemperaturen bzw. hohen Kühlmediumtemperaturen ist.

Eine vorteilhafte Ausgestaltung der Erfindung ist im Anspruch 2 angegeben: Die Anordnung der Rezirkulationspumpe direkt nach dem Absorptionswärmetauscher und vor dem Lösungskühler ermöglicht einen relativ großen Druckabfall am Lösungskühler und damit eine turbulente Strömung der Lösung im Lösungskühler. Dadurch läßt sich vorteilhaft der Wärmeübergang am Lösungskühler verbessern und die Größe des Lösungskühlers deutlich verringern. Vorzugsweise wird bei Arbeitsmitteln mit geringem Dampfdruck, wie zB. Wasser, der Lösungskühler nach der Rezirkulationspumpe angeordnet, da im Gegensatz zur Anordnung nach Anspruch 3 vorallem in dieser Anordnung ein guter Wärmeübergang mit grossem Druckabfall im Lösungskühler erzielt werden kann, ohne dass die Lösung im Lösungskühler kavitiert.

Eine weiterhin vorteilhafte Ausgestaltung der Erfindung ist im Anspruch 3 angegeben, zB. bei Arbeitsmitteln mit hohem Dampfdruck: Bei Anordnung der Rezirkulationspumpe nach dem Lösungskühler kann einerseits die Lösung unterkühlt werden für einen guten Stoff- und Wärmeübergang im Absorptionswärmetauscher, andererseites ist sichergestellt, dass die Lösung durch das Ansaugen der Pumpe nicht kavitiert. Als Vorteil ist die Reduktion der erforderlichen Zulaufhöhe, bzw. der Verzicht auf die Verwendung relativ aufwendiger Sonderpumpen mit sog. Inducervorrichtungen zu nennen.

Vorteilhaft ist auch eine Kombination aus Anspruch 2 und 3: Beispielsweise verbindet ein erster Lösungskühler die Saugseite der Rezirkulationspumpe mit dem Austritt des Absorptionswärmetauschers, ein zweiter mit relativ hohem Druckverlust die Druckseite der Pumpe mit dem Eintritt des Absorptionswärmetauschers. Diese Anordnung besitzt sowohl den Vorteil geringer Anforderungen an die Rezirkulationspumpe, als auch den Vorteil eines hohen Wärmeübergangs an dem zweiten Lösungskühler. Natürlich können beide Lösungskühler auch durch einen einzigen Wärmetauscher mit entsprechender Paßzahl des Lösungskühlers technisch einfach realisiert werden.

Eine weiterhin vorteilhafte Ausgestaltung der Erfindung ist im Anspruch 4 angegeben: Das Ansaugen der Lösungskreispumpe von nur schwach unterkühlter Lösung aus dem Absorptionswärmetauscher erfordert üblicherweise eine entsprechende Zulaufhöhe und eine aufwendige kavitationsunempfindliche Pumpe. Von der nach Ansprüchen 1-3 eingesetzen Rezirkulationspumpe läßt sich vorteilhaft ein Teilstrom mit einem Vordruck weit über dem Siededruck zur Speisung der Lösungskreispumpe abzweigen, so daß diese keinen besonderen pumpentechnischen Anforderungen mehr unterliegt. Dadurch können als Lösungskreispumpen zur entsprechenden Austreibereinheit einfache Standardpumpen, insbesondere mit kleinen Ansaugquerschnitten eingesetzt werden. Andererseits kann vorteilhaft auch die als Vorpumpe dienende Rezirkulationspumpe zusammen mit den nachfolgenden Stufen der Lösungskreispumpe in einem Pumpengehäuse zusammengefaßt sein.

Eine weiterhin vorteilhafte Ausgestaltung der Erfindung ist im Anspruch 5 angegeben: Falls die Dampfdruckdifferenz, die von der Lösungskreispumpe aufzubringen ist, nicht den Druckhub der Rezirkulationspumpe übersteigt, so wird für den Transport der Lösung zur Austreibereinheit keine eigene Lösungskreispumpe benötigt. Dies kann insbesondere vorteilhaft eingesetzt werden bei Verwendung von Arbeitmitteln mit geringem Dampdruck, wie z.B. Wasser oder Alkoholen.

Eine weiterhin vorteilhafte Ausgestaltung der Erfindung ist im Anspruch 6 angegeben: Die von dem zugehörigen Lösungskreis kommende warme bzw. kalte Lösung muß zur Aufrechterhaltung des Absorptionsprozesses der Absorbereinheit oder Resorbereinheit zugeführt werden. Die Leitung mit der warmen Lösung wird vorteilhaft mit dem Eingang des Lösungskühlers verbunden. Dadurch wird erreicht, daß die Lösung im Lösungskühler wegen seiner guten Wärmedurchgangszahl effizient abgekühlt wird, bevor sie dem Absorptionswärmetauscher zugeführt wird. Bei salzhaltigen, flüssigen Absorptionsmitteln kann die konzentrierte, warme Lösung aus der Austreibereinheit, die sonst beim Drosseln bzw. Abkühlen kristallisieren würde, dadurch entspannt bzw. abgekühlt werden, dass sie vorteilhaft am Eingang des Lösungskühlers mit der Lösung vom Ausgang des Absorptionswärmetauschers gemischt wird. Ein Regulierventil zur Drosselung im Lösungskreis zwischen dem Ausgang der Austreibereinheit und dem Eingang des Lösungskühlers kann entfallen. Bei Arbeitsmitteln mit geringem Dampfdruck, wie zB. Wasser, ist es vorteilhaft über eine zusätzliche Lösungspumpe zB. zwischen Generator und Lösungswärmetauscher, die Lösung aus dem Lösungswärmetauscher auf das Druckniveau der Lösung aus der Rezirkulationspumpe am Eingang des Lösungswärmetauschers anzuheben und dort beizumischen. Alternativ kann die zusätzliche Lösungspumpe auch entfallen, wenn die arbeitsmittelarme Lösung, die vom Generator durch den Lösungswärmetauscher strömt, vor der Rezirkulationspumpe der Lösung aus dem Absorptionswärmetauscher beigemischt wird. Ist die kalte Lösung, zB. von einem Desorber, aus dem Lösungskreislauf bezüglich des Druckniveaus des Resorbers ausreichend unterkühlt, wird die Leitung mit der kalten Lösung vorteilhaft mit dem Eingang des als Resorber dienenden Absorptionswärmetauschers verbunden.

Eine weiterhin vorteilhafte Ausgestaltung der Erfindung ist im Anspruch 7 angegeben: Der Rezirkulationskreis läßt sich als Steueranordung für die Wärmeübergangszahl im Absorptionswärmetauscher einsetzen, indem zB. der Lösungsstrom durch den Lösungskühler mit Hilfe einer Rezirkulationspumpe geeignet eingestellt wird. Dadurch wird erreicht, daß der Stoff- und Wärmeübergang im Absorptionswärmetauscher in weiten Grenzen regelbar ist. Dies kann beispielsweise vorteilhaft zur Anpassung der Anlage an saisonal schwankende Kühlwassertemperaturen eingesetzt werden. Die relativ aufwendige Regelung der Kühlwasservorlauftemperatur durch Rücklaufbeimischung kann dadurch entfallen.

Eine weiterhin vorteilhafte Ausgestaltung der Erfindung ist im Anspruch 8 angegeben: Üblicherweise wird die Leistung von Sorptionsanlagen über die Temperatur der Antriebswärme geregelt, d.h. zur Teillast wird die Antriebstemperatur reduziert. Zur Verbesserung des Teillastwirkungsgrades sollte dabei der Lösungskreisumlauf möglichst proportional mit der Leistung reduziert werden. Erfindungsgemäß stellt der Rezirkulationskreis mit Lösungskühler durch den regelbaren Stoff- und Wärmeübergang im Absorptionswärmetauscher vorteilhaft eine Steueranordnung dar für die Leistung der Anlage, wobei die Regelung zB. über die Einstellung des Kühlmediumstroms oder Lösungsstroms durch den Lösungskühler erfolgen kann. Dadurch wird erreicht, daß vorteilhaft einerseits der Leistungsumsatz der Anlage geregelt werden kann und andererseits selbst bei einem Lösungskreisumlauf nahe Null immer noch eine vollständige Benetzung des Absorptionswärmetauschers sichergestellt ist.

Eine weitere, vorteilhafte Ausgestaltung der Erfindung ist im Anspruch 9 angegeben: Durch die effiziente Wärmeübertragung mittels Lösungskühler und Absorptionswärmetauscher werden am Absorber nur relativ kleine treibende Temperaturdifferenzen benötigt und es stehen daher selbst bei kleiner Antriebstemperatur zur Wärmeübertragung in anderen Komponenten noch ausreichende treibende Temperaturdifferenzen für einen überfluteten Betrieb von Generator, Verdampfer bzw. Desorber zur Verfügung. Die in ihrer technischen Konstruktion sehr einfachen und günstigen überfluteten Wärmetauscher bilden daher eine besonders vorteilhafte technische Lösung für die Sorptionsanlage nach Anspruch 1.

Eine weiterhin vorteilhafte Ausgestaltung der Erfindung ist im Anspruch 10 angegeben: Zur Steigerung der Wärmeübergangszahl für Fallfilm-Absorptionswärmetauscher werden in vielen Sorptionsanlagen Additive wie z.B. 2 Ethyl-Hexanol zugesetzt, welche bei hohen Flächenbelastungen (= Leistung / Wärmetauscherfläche) im Absorptionswärmetauscher die Wärmeübergangszahl um ein Mehrfaches erhöhen. Bei geringer Flächenbelastung fällt die Verbesserung durch das Additiv jedoch stark ab und reduziert sich bis zu einem Wert ohne Additivzusätze. Durch die Erfindung wird z.B. trotz einer Reduktion der Antriebstemperatur die Flächenbelastung im Absorptionswärmetauscher bei einem relativ hohen Wert gehalten, bei dem die Wirkung der wärmeübergangsverbessernden Additive weitestgehend erhalten bleibt. Dies erlaubt den Betneb von Sorptionsanlagen in Temperaturbereichen für Antriebswärme, Nutzwärme, Kühlmedium oder Nutzkälte, der bisher nur unter Einsatz entsprechend großer und/oder korrosionsbeständiger Wärmetauscher nutzbar war.

Eine weiterhin vorteilhafte Ausgestaltung der Erfindung ist im Anspruch 11 angegeben: Salzhaltige, flüssige Absorptionsmittel haben häufig den Nachteil, daß die maximale Temperaturdifferenz zwischen Verdampfungs- und Absorptionstemperatur der arbeitsmittelarmen Lösung entweder aufgrund der Kristallisationsgrenze oder durch hohe Viskositäten der Lösung nahe an der Kristallisationsgrenze begrenzt ist. Erfindungsgemäß tritt in einer Anlage nach Anspruch 1 im Absorptionswärmetauscher aufgrund der hohen Rezirkulation über den Lösungskühler nur mehr die arbeitsmittelreiche Konzentration mit vorteilhaft minimaler Variation im Salzgehalt auf. Als Vorteil ergibt sich hieraus eine höhere Sicherheit gegen die Kristallisation im Absorptionswärmetauscher für Betriebspunkte nahe an der Kristallisationsgrenze. Der Rezirkulationsstrom kann unabhänig von den übrigen Prozeßparameter des zugehörigen Lösungskreislaufs bzw. der Gesamtanlage eingestellt werden. Entscheidend ist auch, dass für hochviskose Lösungen nahe an der Kristallisationsgrenze ein relativ guter Stoff- und Wärmeübergang im Absorptionswärmetauscher bzw. Lösungskühler erreicht wird. Dadurch besteht die Möglichkeit, den Betriebspunkt des Absorbers nahe an der Kristallisationsgrenze einzustellen, und den Dampfdruck im Absorber bei gegebener Kühlmediumtemperatur und insbesondere bei engem Lösungsfeld minimal zu halten.

Eine weiterhin vorteilhafte Ausgestaltung der Erfindung ist im Anspruch 12 angegeben: Da nicht mit Wasserdampf gesättigte Luft als Kühlmedium bei höheren Temperaturen vorliegt als Verdunstungskühlwasser bei dem entsprechenden Außenluftzustand, muß bei Trockenkühlung die Absorptionswärme bei einem höheren Temperaturniveau abgegeben werden als bei Verdunstungskühlung. Aufgrund des durch den Lösungskühler verbesserten Stoff- und Wärmeübergangs im Absorptionswärmetauscher kann bei gegebener Verdampfungs- bzw. Austreibertemperatur die Abwärme der Sorptionsanlage durch das Kühlmedium bei einer höheren Temperatur abgeführt werden. Das ermöglicht die direkte Kühlung des Kondensators bzw. Resorbers, Absorbers und Lösungskühlers mit trockener Luft bei Antriebs-, Verdampfungs-, und Lufttemperaturen, die ohne die erfindungsgemässe Anordnung von Absorptionswärmetauscher und Lösungskühler nicht effizient möglich wäre. Zudem kann bei salzhaltigen, flüssigen Absorptionsmitteln mit engem Lösungsfeld der Absorptionswärmetauscher bei Temperaturniveaus bzw. Konzentrationen bis nahe an der Verfestigungsgrenze betrieben werden. Bei einer Wasser/Lithiumbromid-Sorptionskältemaschine liegt mit einer Verdampfungstemperatur von 5°C die maximal verfügbare arbeitsmittelreiche Lösungstemperatur bei ca. 50°C und somit ist die Abwärme im Lösungskühler bzw. Absorptionswärmetauscher noch mit ausreichenden Temperaturdifferenzen besonders effizient und vorteilhaft auf Luft übertragbar. Lösungskühler, Absorptionswärmetauscher und Kondensator können daher als Wärmetauscher mit trockener Luftkühlung ausgebildet sein.

Vorteilhaft nach Anspruch 13 lassen sich auch zur Kühlung des Kondensators und/oder des Absorptionswärmetauschers und/oder des Lösungskühlers effizient Trockenrückkühlwerke einsetzen unter Bedingungen, die ohne die erfindungsgemässe Anordnung von Absorptionswärmetauscher und Lösungskühler einen wirtschaftlichen Einsatz von Trockenkühlung nicht zulassen würden, wie bereits oben für die direkte Luftkühlung erläutert wurde.

Auch Kombinationen aus direkter und indirekter Luftkühlung nach Anspruch 12 und 13 können besonders vorteilhaft sein. Beispielsweise kann die direkte Kühlung des Lösungskühlers und des Kondensators mit Luft erfolgen, beim Absorptionswärmetauscher dagegen, ausgeführt als Standardrieselabsorber, eine Kühlung mit Kühlflüssigkeit, die über ein Trockenrückkühlwerk mit Luft gekühlt wird.

Die Möglichkeit, zB. den Betriebspunkt des Absorbers nahe an die Kristallisationsgrenze zu legen aufgrund der erfindungsgemässen Anordnung, wie oben erläutert, erlaubt nach Anspruch 14 vorteilhaft, zB. LiBr/Wasser-Sorptionskälteanlagen, effizient zur Eiserzeugung und Solekühlung einzusetzten. So kann bei einer Verdampfertemperatur von minus 5°C im Verdampfer der Absorber bei einer Temperatur von 35°C betrieben werden, die noch eine effiziente Übertragung der Wärme auf Kühlwasser erlaubt.

Vorteilhaft kann nach Anspruch 15 die Verwendung von Flüssigkeitstrahlpumpen als Rezirkulationspumpen sein, da unter anderem Strahlpumpen wesentlich kostengünstiger als elektrisch angetriebene Flüssigkeitspumpen sind. Der Druckunterschied der Lösung zB. zwischen Generator bzw. Lösungswärmetauscherausgang und Absorber kann als Antriebsenergie genutzt werden, um den Lösungsstrom aus dem Generator als Treibflüssigkeitsstrom für die Strahlpumpe einzusetzen. Als Saugflüssigkeit wird die Lösung, die am Ausgang des Absorptionswärmetauschers austritt und durch einen Lösungskühler strömt, der Strahlpumpe zugeführt. Mit Hilfe des Überdrucks am Gemischstutzen im Vergleich zum Druck im Absorptionswärmetauscher kann vorteilhaft ein guter Wärmeübergang in einem Lösungskühler, der sich zwischen Gemischstutzen der Strahlpumpe und Absorptionswärmetauschereingang befindet, erzielt werden. Bei Arbeitsmittel mit geringem Dampfdruck, wie zB. Wasser, kann es erforderlich sein, den Treibstrahldruck mit einer Lösungspumpe zu erzeugen, die zB. vorzugsweise zwischen Generator und Lösungswärmetauscher angeordnet ist.

Die erzielbaren Vorteile werden an den nun folgenden Ausführungsbeispielen erläutert. In der Zeichnung findet sich die Erfindung beispielsweise veranschaulicht und zwar zeigt
- die Figur 1 schematisch eine einstufige Sorptionsanlage mit den Hauptkomponenten: Kondensator, Verdampfer, Absorber und Generator.
- die Figur 2a schematisch eine einstufige Sorptionsanlage mit den Hauptkomponenten: Resorber, Desorber, Absorber und Generator.
- die Fig. 2b schematisch eine einstufige Sorptionsanlage mit einem Resorber, Desorber, Absorber und Generator, und zwei Flüssigkeitsstrahlpumpen als Rezirkulationspumpen.
- die Figur 3a-c Druck-Temperatur Diagramme für ein- und mehrstufige Anlagen.

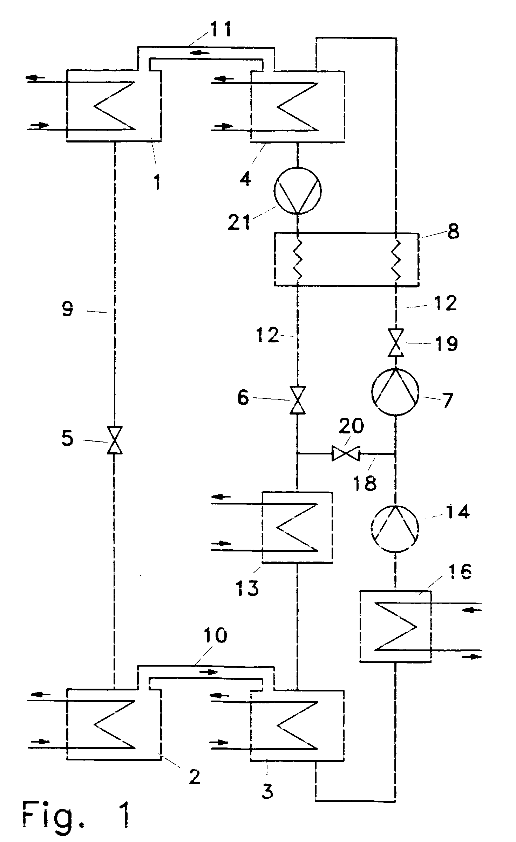

Die Ausbildung der erfindungsgemäßen Sorptionsanlage soll nun anhand der Fig. 1 erläutert werden. Beispielhaft ist eine Sorptionsanlage dargestellt mit nur einem Lösungskreis 12 und den Hauptkomponenten: Kondensator 1, Verdampfer 2, Absorber 3, als gekühlter Absorptionswärmetauscher 3 ausgebildet, und Generator 4. Der Kondensator 1 und der Generator 4 bzw. der Verdampfer 2 und der Absorber 3 sind über eine Dampfleitung 11 bzw. 10 verbunden, das Arbeitsmittel wird in der Leitung 9 , die Lösung im Lösungskreis 12 geführt. 5 bezeichnet die Arbeitsmitteldrossel, 6 und 19 Regulierventile, 7 die Lösungskreispumpe, 8 den Lösungswärmetauscher und 21 eine wahlweise vorhandene Lösungspumpe. Erfindungsgemäß sind nun als zusätzliche Komponenten in der Sorptionsanlage beispielhaft zwei Lösungskühler 13/16 und eine weitere Pumpe 14, ein weiteres Regulierventil 20 sowie eine Verbindungsleitung 18 enthalten, die einen Rezirkulationskreis um den Absorptionswärmetauscher 3 bilden. Da die Lösungskühler 13 und 16 z.B. als Flüssigkeits/Flüssigkeitskühler mit hoher Wärmeübergangszahl vorteilhaft ein effektives Unterkühlen der Lösung ermöglichen und damit eine vorteilhaft niedrige treibende Temperaturdifferenz für den Wärmeübergang benötigen, kann durch den rezirkulierenden, stark unterkühlten Lösungsstrom im Absorptionswärmetauscher 3 die Flächenbelastung, bzw. der Stoff- und Wärmeübergang, deutlich erhöht werden im Vergleich zu Anordnungen ohne Lösungskühler 13/16, wie oben erläutert. Das Zusammenwirken von dem Lösungskühler 13/16 und dem Absorptionswärmetauscher 3 führt also zu einer Verbesserung des Stoff- und Wärmeübergangs im Absorber 3. Dabei dient die Rezirkulation im wesentlichen nicht zur Sicherstellung der Benetzung im Absorptionswärmetauscher 3 oder zur Regelung, sondern zum Umlauf der Lösung durch den Lösungskühlern 13/16 und damit zur Unterkühlung der Lösung. Die hohe Flächenbelastung im Absorptionswärmetauscher 3 führt auch vorteilhaft indirekt zu hohen Flächenbelastungen in dem Generator 4 und Verdampfer 2 und damit zur Verbesserung der Leistungsmerkmale der Sorptionsanlage. Mit der erfindungsgemässen Anordnung von Lösungskühler 13/16 und Absorptionswärmetauscher 3 in Fig. 1 lassen sich alle bereits oben aufgezählten technischen Möglichkeiten vorteilhaft nutzen.

Von Vorteil kann die Anordung der Rezirkulationspumpe 14 vor dem Lösungskühler 13 sein, wie in Fig. 1 gezeigt, um einen am Lösungskühler 13 hohen Druckabfall zu erzeugen und damit eine für den Wärmeübergang vorteilhafte, turbulente Strömung im Lösungskühler 13 zu erreichen. Der Lösungskühler 13 kann daher sehr kompakt und kostengünstig gebaut werden, wobei dann wahlweise auf den Lösungskühler 16 verzichtet werden kann. Bei Arbeitsmittel mit geringem Dampfdruck, wie zB. Wasser, wird diese Anordnung mit Lösungskühler 13 bevorzugt, da bei entsprechend grossem Druckabfall am Lösungskühler 16 die Lösung im Lösungskühler 16 kavitieren würde.

Eine weitere vorteilhafte Ausgestaltung ist den Lösungskühler 16 vor die Rezirkulationspumpe 14 zu setzen, zB. bei Arbeitsmitteln mit hohem Dampfdruck, um einerseits die Lösung abzukühlen und andererseits sicherzustellen, daß beim Ansaugen die Lösung nicht kavitiert. Dadurch kann vorteilhaft auf Zulaufhöhe zur Pumpe 14 oder auf technisch aufwendigen Inducervorrichtungen in der Pumpe 14 verzichtet werden.

Auch die Kombination eines ersten Lösungskühler 16 auf der Saugseite der Pumpe 14 und eines zweiten 13 mit relativ hohem Druckverlust auf der Druckseite der Pumpe 14, wie in Fig. 1 abgebildet, ist vorteilhaft. Diese Anordnung stellt geringe Anforderungen an die Rezirkulationspumpe 14, wie oben erläutert, und führt zu einem hohen Wärmeübergang im zweiten Lösungskühler 13. Vorteilhaft können beide Lösungskühler 13 und 16 in einem Wärmetauschergehäuse mit entspechender Paßzahl vereint werden.

Vorteilhaft kann die Pumpe 14 gleichzeitig auch als Vorpumpe für die Lösungskreispumpe 7 dienen. Da sich der Vordruck nach der Pumpe 14 weit über dem Siededruck der Lösung befinden kann, läßt sich vorteilhaft ein Teilstrom zur Speisung der Lösungskreispumpe 7 verwenden, die dann keinen besonderen pumptechnischen Anforderungen unterliegt, und insbesondere einen kleinen Ansaugquerschnitt besitzen kann. Vorteilhaft können die als Vorpumpe dienende Rezirkulationspumpe 14 und die Lösungskreispumpe 7 in einem Gehäuse zusammengefaßt werden.

Abhängig von den Drücken im Absorber 3 und Generator 4 kann es von Vorteil sein, die Rezirkulationspumpe 14 und die Lösungskreispumpe 7 durch eine einzige Pumpe zu ersetzen, wobei der Lösungsstrom durch 18 und im Lösungskreis 12 am Ausgang der Pumpe über die Regulierventile 19 und 20 eingestellt werden. Dies bietet sich besonders bei kleinen Dampfdruckdifferenzen zwischen Absorber 3 und Generator 4 an, wie sie bei Verwendung von Arbeitmittel mit geringem Dampfdruck in der Sorptionsanlage, wie z.B. Wasser oder Alkoholen, auftreten.

Die Zuführung der vom Generator 4 kommenden, arbeitsmittelarmen, warmen Lösung zur Aufrechterhaltung des Absorptionsprozesses in dem Absorber 3 erfolgt vorteilhaft am Eingang des Lösungskühlers 13, wie in Fig. 1 gezeigt. Dabei wirkt sich günstig aus, daß die warme Lösung bereits im Lösungskühler 13 abgekühlt wird, der die Lösung wegen seiner guten Wärmedurchgangszahl z.B. als Flüssigkeits/ Flüssigkeitskühler effizient abkühlt, bevor sie dem Absorptionswärmetauscher 3 zugeführt wird. Das Mischen der warmen, sehr arbeitsmittelarmen Lösung aus dem Generator 4 mit der Lösung aus dem Absorptionswärmetauscher 3 über die Leitung 18 hat bei salzhaltigen, flüssigen Absorptionsmitteln den Vorteil, dass ein Auskristallisieren des Salzes aus der Lösung beim Drosseln und beim anschliessenden weiteren Abkühlen der Lösung im Lösungskühler 13 verhindert wird. Vorteilhaft kann dann das Regulierventil 6 entfallen oder nach dem Lösungskühler 13 eingebaut werden. Bei Arbeitsmittel mit geringem Dampfdruckunterschied zwischen Generator 4 und Absorber 3 kann es erforderlich sein, eine zusätzliche Lösungspumpe 21 zwischen Generator 4 und Lösungswärmetauscher 8 einzubauen. Dadurch kann die Lösung vom Generator 4 auf den gleichen Druck angehoben werden am Eingang des Lösungskühlers 13 wie die Lösung von der Rezirkulationspumpe 14 kommend und gleichzeitig auch ein guter Wärmeübergang im Lösungswärmetauscher 8 erreicht werden. Alternativ kann auf die Lösungspumpe 21 verzichtet werden, wenn die arbeitsmittelarme Lösung vom Lösungsmittelwärmetauscher 8 kommend vor der Rezirkulationspumpe 14 oder am Eingang des Lösungskühlers 16 beigemischt wird.

Zudem stellt der Rezirkulationskreis mit den Lösungskühlern 13 /16, der Pumpe 14 und dem Regulierventil 20 eine Steueranordnung dar für den Wärmeübergang im Absorptionswärmetauscher 3. Zum Beispiel lässt sich durch Einstellen des Kühlmediumstroms und /oder des Lösungsstroms durch die Lösungskühler 13/16 die Flächenbelastung bzw. der Wärmeübergang im Absorber 3 in weiten Grenzen variieren. Dies kann vorteilhaft zur Anpassung der Anlage an schwankende Kühlwassertemperaturen im Absorber 3 und Lösungskühler 13/16 genutzt werden. Eine relativ aufwendige Regelung der Kühlwasservorlauftemperatur durch Rücklaufbeimischung im Absorber 3 kann dadurch entfallen.

Auch kann der Rezirkulationskreis mit den Lösungskühlern 13/16, der Rezirkulationspumpe 14 und dem Regulierventil 19 und 20 eine Steueranordung für die Leistung der Anlage sein. Wie erwähnt, läßt sich zB. durch Einstellen des Lösungs- oder Kühlmediumstroms durch die Lösungskühler 13/16 vorteilhaft einerseits der Leistungsumsatz der Anlage einstellen, aber andererseits selbst bei einem Lösungskreisumlauf in 12 nahe Null immer noch eine vollständige Benetzung des Absorptionswärmetauschers 3 sicherstellen.
Aufgrund des effizienten Stoff- und Wärmeübergangs mittels Lösungskühler 13/16 und Absorptionswärmetauscher 3 in einer Anlage nach dem Ausführungsbeispiel in Fig. 1 werden nur relativ kleine treibende Temperaturdifferenzen benötigt. Es stehen daher selbst bei kleiner Antriebstemperatur zur Wärmeübertragung in den anderen Komponenten Kondensator 1, Verdampfer 2 und Generator 4 noch ausreichend treibende Temperaturdifferenzen für einen überfluteten Generator- 4 bzw. Verdampferwärmetauscher 2 zur Verfügung. Die in ihrer technischen Konstruktion sehr einfachen und günstigen, überfluteten Wärmetauscher 2 und 4 bilden daher eine besonders vorteilhafte technische Lösung für die Sorptionsanlage nach Anspruch 1.

Ein weiterer Vorteil einer Anlage nach dem Ausführungsbeispiel 1 ergibt sich im Zusammenhang mit Additiven zur Steigerung der Wärmeübergangszahl für einen Absorber 3 als Fallfilm-Absorptionswärmetauscher, wie z.B. 2 Ethyl-Hexanol, welche bei hohen Flächenbelastungen die Wärmeübergangszahl um ein Mehrfaches erhöhen, aber bei geringer Flächenbelastung nur sehr schwache oder keine Wirkung zeigen. Erfindungsgemäß wird durch die Anordnung nach Anspruch 1 in Fig. 1 z.B. trotz einer Reduktion der Antriebstemperatur am Generator 4 die Flächenbelastung im Absorptionswärmetauscher 3 bei einem relativ hohen Wert gehalten, bei dem die Wirkung der wärmeübergangsverbessernden Additive vorteilhaft weitestgehend erhalten bleibt. Dies erlaubt den Betrieb von Sorptionsanlagen in Temperaturbereichen für die Antriebswärme, Nutzwärme, Kühlwärme oder Kälte, der bisher nur unter Einsatz entsprechend großer und/oder korrosionsbeständiger Wärmetauscher erreichbar war.

Bei Verwendung von salzhaltigen, flüssigen Absorptionsmitteln im Lösungskreislauf 12 in einer Anlage nach Fig. 1 kann vorteilhaft verhindert werden, daß die maximale Temperaturdifferenz zwischen Verdampfungstemperatur in 2 und Absorptionstemperatur in 3 der arbeitsmittelarmen Lösung entweder aufgrund der Kristallisationsgrenze oder durch hohe Viskositäten begrenzt ist. Erfindungsgemäß tritt in einer solchen Anlage im Absorptionswärmetauscher 3 aufgrund der einstellbaren Lösungsstroms über die Rezirkulationspumpe 14 nur arbeitsmittelreiche Konzentrationen mit minimaler Variation im Salzgehalt auf. Als Vorteil ergibt sich daraus eine höhere Sicherheit gegen Kristallisation im Absorptionswärmetauscher 3. Der hohe Rezirkulationsstrom durch die Lösungskühler 13/16 kann unabhänig von den übrigen Prozeßparametern im Lösungskreislauf 12 bzw. der Gesamtanlage stabil geregelt werden. Insbesondere nahe an der Kristallisationsgrenze, an welcher Lösungen hoch viskose werden und daher einen schlechten Wärmeübergang in den Absorptionswärmetauscher 3 besitzen, wird ein guter Stoff- und Wärmeübergang durch die erfindungsgemässe Anordnung von Absorptionswärmetauscher 3 und Lösungskühler 13/16 erreicht. Somit können zB. LiBr/Wasser-Sorptionskälteanlagen effizient zur Solekühlung und Eiserzeugung eingesetzt werden. Beispielsweise kann für eine Verdampfertemperatur von minus 5°C im Verdampfer 2 die maximal verfügbare arbeitsmittelreiche Lösungstemperatur noch bei 35°C liegen, die aus oben genannten Gründen effizient auf Kühlwasser übertragen werden kann.

Die Erfindung ermöglicht auch, den Einsatzbereich der Kühlung mit trockener Luft in Sorptionsanlagen zu erweitern, aufgrund der oben erwähnten besseren Wärmeübertragung an das Kühlmedium, wobei in diesem Fall der Kondensator 1 und/oder der Absorptionswärmetauscher 3 und/oder die Lösungskühler 13/16 als Wärmetauscher mit dem Kühlmedium trockener Luft ausgebildet ist/sind. Aus oben genannten Gründen kann vorteilhaft der Betriebspunkt des Absorptionswärmetauschers 3 bei salzhaltigen, flüssigen Absorptionsmitteln nahe an der Verfestigungsgrenze der Lösung liegen, was, wie erwähnt, den wirtschaftlichen Einsatzbereich von Sorptionskälteanlagen mit direkter und indirekter Luftkühlung erweitert. Beispielsweise kann im Fall einer Sorptionskältemaschine für das Stoffpaar LiBr/Wasser bei einer Verdampfungstemperatur von 5°C im Verdampfer 2 die maximal verfügbare arbeitsmittelreiche Lösungstemperatur bei ca. 50°C im Absorber 3 liegen. Die vom Kondensator und Absorber abzuführende Wärme ist noch mit ausreichenden Temperaturdifferenzen effizient und vorteilhaft auch bei Salzkonzentrationen, bei welchen die Lösung hoch viskose ist, durch die erfindungsgemässe Anordnung von Lösungskühler 13/16 und Absorptionswärmetauscher 3 direkt oder indirekt auf Luft übertragbar. Vorteilhaft kann für die Kühlung zB. des Lösungskühlers 13/16 und des Absorptionswärmetauschers 3 ein Trockenrückkühlwerk eingesetzt werden unter Bedingungen, unter welchen ohne Lösungskühler 13/16 keine effiziente Trockenkühlung möglich wäre.

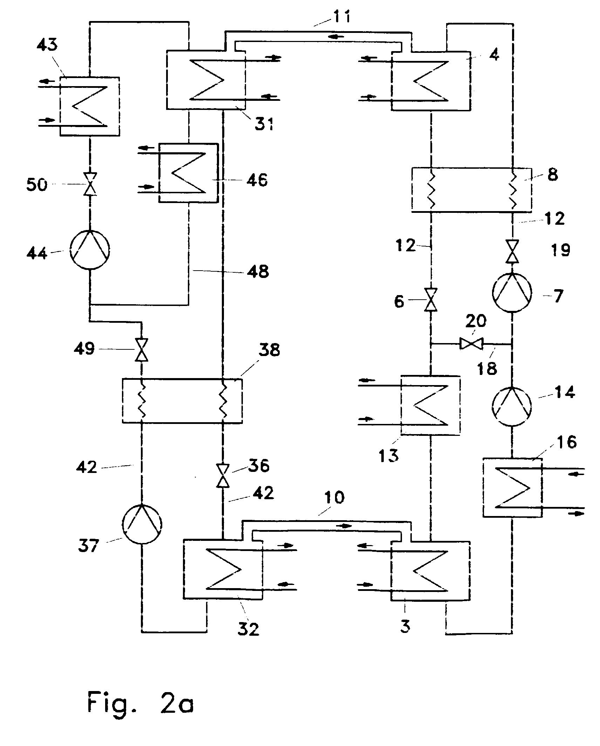

Ein weiteres Ausführungsbeispiel der erfindungsgemäßen Sorptionsanlage zeigt die in Fig. 2a dargestellte Resorptionskältemaschine. Statt des Kondensators 1 und des Verdampfers 2 weist die Anlage einen Resorber 31, als Absorptionswärmetauscher 31 ausgebildet, und einen Desorber 32 auf, sowie einen weiteren Lösungskreis 42, Lösungswärmetauscher 38, Lösungskreispumpe 37 und Regulierventile 36 und 49. Vorteilhaft besitzt die Anlage nicht nur am Absorber 3 eine erfindungsgemässe Anordnung von Absorptionswärmetauscher 3 und Lösungskühler 13/16, wie im Ausführungsbeispiel nach Fig. 1 erläutert, sondern auch der Resorber als Absorptionswärmetauscher 31 bildet mit dem Lösungskühler 43 und 46, der Leitung 48, der Pümpe 44 und dem Regulierventil 50 einen Rezirkulationskreislauf. Es ergeben sich die gleichen erfindungsgemäßen Vorteile wie für den Rezirkulationskreislauf am Absorber 3, die im ersten Ausführungsbeispiel nach Fig. 1 erläutert wurden.

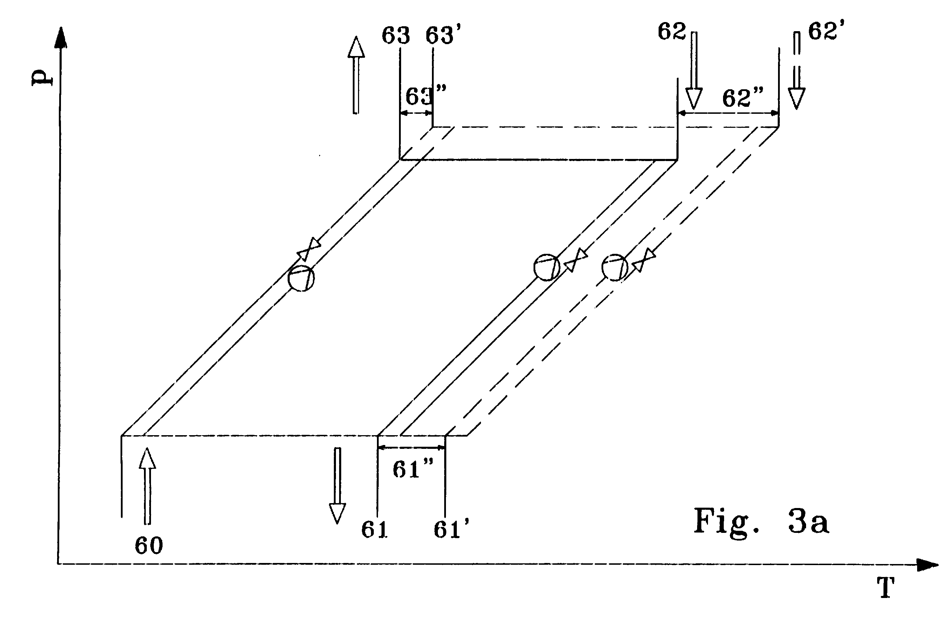

Bei einer einstufigen Anlage kann die Pumpe 44 nicht als Vorpumpe für die Lösungskreispumpe 37 eingesetzt werden, noch können die Pumpen 37 und 44 als eine Pumpe ausgelegt werden, wie das für die Pumpen 7 und 14 vorteilhaft möglich ist. In mehrstufigen Anlagen ist es dagegen vorteilhaft möglich, die Pumpe 44 als Vorpumpe oder als Lösungskreispumpe der nachgeschalteten, darüberliegenden Stufe einzusetzen. Von Vorteil ist es, sowohl am Absorber 3 als auch am Resorber 31 einen Rezirkulationskreis aus Lösungskühlern 13/16 bzw. 43/46 und Pumpen 14 bzw. 44 anzuschließen, da beide für sich additiv die Antriebstemperatur am Generator 4 absenken, wie in Fig.3a erläutert wird. Im Fall von Resorptionswärmetransformatoren oder mehrstufigen Resorptionskältemaschinen ist es weiterhin vorteilhaft, vom höheren Druck- bzw. Temperaturniveau zuströmende, warme Lösung am Eingang des Lösungskühler 43 zuzuführen, da im Lösungskühler 43 effektiv die Wärme abgeführt wird.

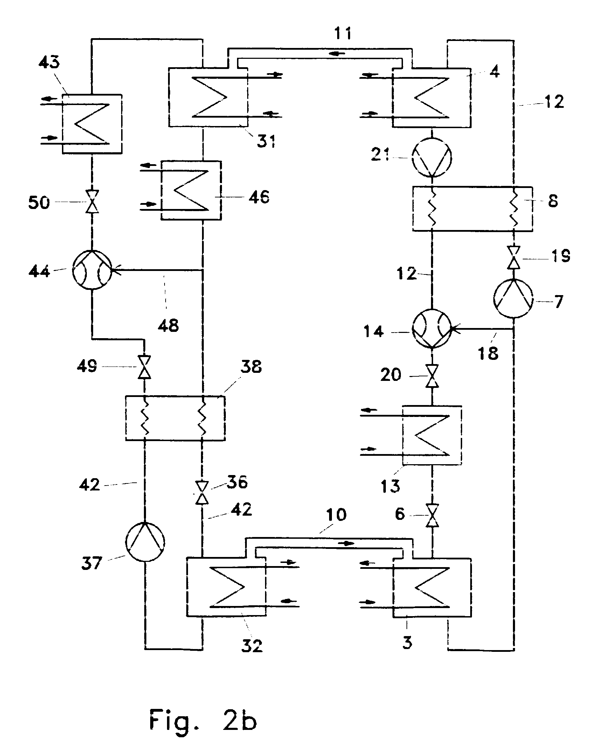

Fig. 2b zeigt eine ähnliche Sorptionsanlage wie Fig. 2a mit dem wesentlichen Unterschied, dass die mechanische Lösungspumpe 14 bzw. 44 ersetzt ist durch eine Flüssigkeitsstrahlpumpe 14 bzw. 44. Die Treibflüssigkeit für die Strahlpumpe 14 bzw. 44 ist die Lösung aus dem Generator 4 im Lösungskreis 12 bzw. die Lösung im Lösungskreis 42, die mit der Pumpe 37 auf entsprechenden Druck gebracht wird. Im Fall der Strahlpumpe 14 wird also der Druckunterschied der Lösung zwischen Generator 4 und Absorber 3 genutzt, der zB. bei Ammoniak/Wasser- Sorptionsanlagen ausreichend gross ist. Bei Stoffpaaren mit kleinem Druckunterschied zwischen Generator 4 und Absorber 3, zB. LiBr/Wasser, wird mit Hilfe einer Lösungspumpe 21 zwischen Generator 4 und Lösungswärmetauscher 8 ein guter Wärmeübergang im Lösungswärmetauscher 8 erzielt. Die Lösungspumpe 21 kann vorteilhaft so ausgelegt werden, dass sie neben dem Druckabfall im Lösungswärmetauscher 8 auch genügend Druck für die Treibflüssigkeit der Strahlpumpe 14 liefert. Auf der Saugseite der Strahlpumpe 14 bzw. 44 wird Lösung vom Ausgang des Absorptionswärmetauschers 3 bzw. des Lösungskühlers 46 zugeführt. Am Gemischausgang der Strahlpumpe 14 bzw. 44 kann der Überdruck im Vergleich zum Druck im Absorptionswärmetauscher 3 bzw. 31 benutzt werden, um einen guten Wärmeübergang im Lösungskühler 13 bzw. 43 zu erreichen. Auf eine im Vergleich zur Strahlpumpe 14 bzw. 44 teuere Lösungspumpe im Rezirkulationskreis kann verzichtet werden.

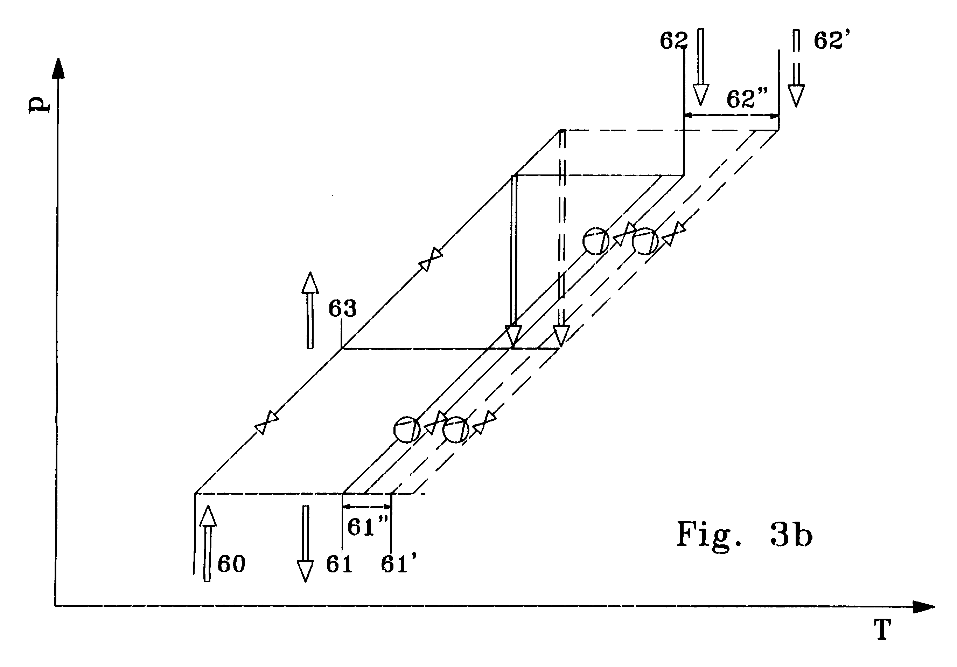

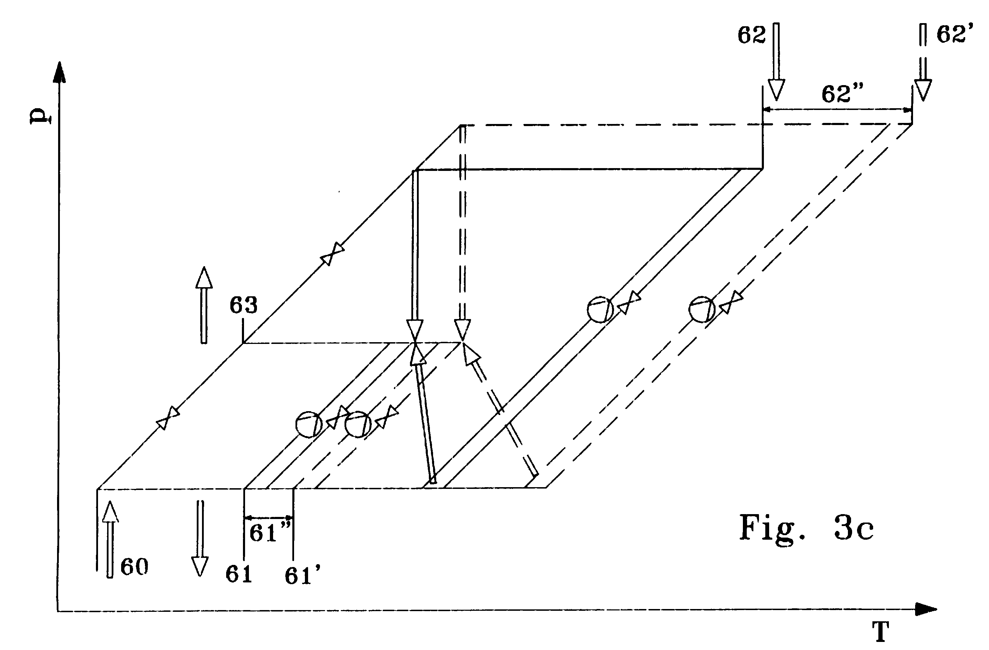

Anhand der Druck-Temperatur-Diagramme in Fig. 3a-c werden beispielhaft die Vorteile der Erfindung in Bezug auf die Temperaturniveaus der umgesetzten Wärmemengen für ein- und mehrstufige Sorptionskältemaschinen aufgezeigt. Die Pfeile markieren die Temperaturniveaus und veranschaulichen, ob Wärmemengen zu- oder abgeführt werden. Für eine einstufige Resorptionskältemaschine in Fig. 3a werden die zugeführten Wärmemengen am Desorber und am Generator mit 60 und 62 bzw.62' bezeichnet, die internen Prozesstemperaturen der abgeführten Wärmemengen am Absorber und Resorber mit 61 bzw. 61' und 63 bzw 63'. Ohne Rezirkulationskreis mit Lösungskühler werden die Wärmemengen am Generator bei der Temperatur bei 62' zugeführt und bei der internen Prozesstemperatur von 61 'am Absorber und 63 am Resorber abgeführt. Mit den zusätzlichen, erfindungsgemäßen Lösungskühlern in den Rezirkulationskreisen verschieben sich die internen Prozesstemperaturen der abgeführten Wärmemengen 61 und 63 vorteilhaft zu tieferen internen Prozesstemperaturen und damit auch die Antriebswärme zu einer Temperatur bei 62 am Generator aufgrund der verbesserten Wärmeübergangszahlen im Resorber und Absorber. Die Temperaturverschiebung am Generator, die mit 62" bezeichnet ist, setzt sich vorteilhaft additiv zusammen aus den Verschiebungen am Absorber 61" und am Resorber 63". Läßt man hingegen die Antriebstemperatur bei dem ursprünglichen Wert bei 62', so erhöht sich die Leistung der gesamten Anlage. D.h. es steigen am Verdampfer und Generator entsprechend auch die pro Wärmtauscherfläche übertragenen Leistungen, wodurch sich deren Wärmeübergangszahl ebenfalls erhöht. Hingegen wird bei gleichbleibender Anlagenleistung wahlweise die Temperaturabsenkung der benötigten Antriebswärme 62 bzw. 62' oder der verfügbaren Kälteleistung 60 am Desorber bzw. Verdampfer ermöglicht. Entsprechend wird für den einstufigen Wärmetransformator durch den vorteilhaften Einsatz des Lösungskühlers am diabaten Absorber bzw. Resorber wahlweise die benötigte Antriebstemperatur bzw. Kühlwassertemperatur abgesenkt oder auch die verfügbare Nutztemperatur erhöht. Die für die einstufigen Anlagen dargelegten Vorteile bei Einsatz von mindestens einem Absorptionswärmetauscher mit Lösungskühler erzielt man entsprechend auch in mehrstufigen Anlagen wie im folgenden anhand der Figuren 3b und 3c beispielhaft erläutert wird.

Ein Beispiel eines vorteilhaften Einsatzes der Erfindung bei einer zweistufigen Sorptionskältemaschine mit hohem Wirkungsgrad ist in dem Druck-Temperatur Diagramm in Fig.3b dargelegt. Bei dieser Sorptionskältemaschine wird die Antriebswärme gegenüber der einstufigen Anlage bei höherer Temperatur 62 bzw. 62' zugeführt und in der Anlage zweimal nacheinander zum Austreiben der Lösung eingesetzt, wodurch sich die Kältezahl auf ca. 1.2 erhöht. Beispielsweise wird bereits durch nur einen Absorptionswärmetauscher mit erfindunggemäß zusätzlichem Lösungskühler am Absorber die interne Prozesstemperatur zur Auskopplung der Absorberwärme 61' um 61" auf die interne Prozesstemperatur bei 61 abgesenkt und infolgedessen die benötigte Antriebstemperatur für diese zweistufige Sorptions- bzw. Resorptionskältemaschine um mindestens ca. zweimal 61", das ca. gleich 62" ist, von der Temperatur bei 62' auf der bei 62 abgesenkt. Erfindungsgemäß eröffnet sich dadurch zB. vorteilhaft der Antrieb von zweistufigen Absorptionskältemaschinen mit hohem Wirkungsgrad durch Niederdruckdampfnetze bei ca. 130°C. Wahlweise kann ebenso wie bei einer einstufigen Anlage bei sonst unveränderten Temperaturen der Antriebswärme und Nutzkälte auch die Temperatur des Kühlmediums zur Wärmeabgabe von Kondensator bzw. Absorber angehoben werden, sodass die Kühlung der Anlage mit trockener Luft ohne Verbrauch von Kühlwasser ermöglicht wird.

In dem Druck-Temperatur-Diagramm in Figur 3c ist eine dreistufige Sorptionskältemaschine mit hohem Wirkungsgrad dargestellt. Durch nochmalige Steigerung der Antriebstemperatur wird die Kältezahl dieser Sorptionskältemaschine gegenüber der zweistufigen Anlage von 1.2 auf ca. 1.5 erhöht. Hier wird z.B. durch einen Absorptionswärmetauscher mit Lösungskühler am Absorber die interne Prozesstemperatur zur Auskopplung der Absorberwärme 61 um 61" von der Temperatur bei 61' abgesenkt und infolgedessen die benötigte Austreibertemperatur bei 62 im Hochtemperaturgenerator dieser Anlagen bereits um ca. zweimal 61" abgesenkt. Eine weitere Absenkung dieser Temperatur um insgesamt 62", das entspricht ca. dreimal 61", kann erreicht werden durch Hinzufügen eines weiteren, erfindungsgemäßen Rezirkulationskreises am Hochtemperaturabsorber. Erfindungsgemäß eröffnet sich dadurch die Möglichkeit selbst für dreistufige Sorptions- bzw. Resorptionsmaschinen die Austreibertemperatur bei 62 unter der bekannten Korrosionsgrenztemperatur von ca. 150 bis 160°C zu halten und damit einen dauerhaften Betrieb dieses Anlagetyps zu ermöglichen.

### Bezugszeichenliste:

- 1 -: Kondensator
- 2 -: Verdampfer
- 3 -: Absorber, ausgebildet als gekühlter Absorptionswärmetauscher
- 4 -: Generator
- 5 -: Arbeitsmitteldrossel
- 6 -: Regulierventil
- 7 -: Lösungskreispumpe
- 8 -: Lösungswärmetauscher
- 9 -: Leitung
- 10 -: Dampfleitung zwischen Verdampfer bzw. Desorber und Absorber
- 11 -: Dampfleitung zwischen Generator und Kondensator bzw. Resorber
- 12 -: Lösungskreis
- 13-: Lösungskühler
- 14 -: Rezirkulationspumpe, ausgebildet als mechanische Flüssigkeitspumpe bzw. in Fig. 2b als Flüssigkeitsstrahlpumpe
- 16 -: Lösungskühler
- 18 -: Verbindungsleitung
- 19 -: Regulierventil
- 20 -: Regulierventil
- 21 -: Lösungspumpe
- 31-: Resorber, ausgebildet als gekühlter Absorptionswärmetauscher
- 32 -: Desorber
- 36 -: Regulierventil
- 37 -: Lösungskreispumpe
- 42 -: Lösungskreis
- 43 -: Lösungskühler
- 44 -: Rezirkulationspumpe, ausgebildet als mechanische Flüssigkeitspumpe oder in Fig. 2b als Flüssigkeitsstrahlpumpe
- 46-: Lösungskühler
- 48 -: Leitung
- 49 -: Regulierventil
- 50 -: Regulierventil
- 60 -: zugeführte Wärmemenge am Desorber oder Verdampfer
- 61 -: interne Prozesstemperatur der abgeführten Wärmemenge am Absorber mit Lösungskühler
- 61'-: interne Prozesstemperatur der abgeführten Wärmemenge am Absorber ohne Lösungskühler
- 61"-: Temperaturverschiebung am Absorber
- 62 -: zugeführte Wärmemenge am Generator, mit Lösungskühler am Absorber und Resorber
- 62'-: zugeführte Wärmemenge am Generator, ohne Lösungskühler am Absorber und Resorber
- 62"-: Temperaturverschiebung am Generator
- 63 -: interne Prozesstemperatur der abgeführten Wärmemenge am Resorber mit Lösungskühler oder am Kondensator
- 63'-: interne Prozesstemperatur der abgeführten Wärmemenge am Resorber ohne Lösungskühler oder am Kondensator
- 63"-: Temperaturverschiebung am Resorber

## Patentansprüche

1. Ein- oder mehrstufige Sorptionswärmewandleranlage, wie z.B. Wärmepumpe, Kälteanlage oder Wärmetransformator, mit wenigstens einem Absorber (3) und/oder Resorber (31), ausgebildet als gekühlte Absorptionswärmetauscher,
dadurch gekennzeichnet,
daß um zumindest einen der gekühlten Absorptionswärmetauscher (3 bzw. 31) ein Rezirkulationskreis mit zumindest einem Lösungskühler (13,16 bzw. 43,46) zur Unterkühlung der Lösung im Rezirkulationskreis und mit zumindest einer Pumpe (14 bzw. 44) gebildet ist.

2. Sorptionswärmewandleranlage nach Anspruch 1,
dadurch gekennzeichnet,
daß zumindest eine Rezirkulationspumpe (14 bzw. 44) zwischen dem Ausgang des Absorptionswärmetauschers (3 bzw. 31) und dem Eingang des Lösungskühlers (13 bzw. 43) geschaltet ist.

3. Sorptionswärmewandleranlage nach einem der vorhergehenden Ansprüche,
dadurch gekennzeichnet,
daß zumindest eine Rezirkulationspumpe (14 bzw. 44) zwischen dem Eingang des Absorptionswärmetauschers (3 bzw. 31) und dem Ausgang des Lösungskühlers (16 bzw. 46) geschaltet ist.

4. Sorptionswärmewandleranlage nach einem der vorhergehenden Ansprüche,
dadurch gekennzeichnet,
daß zumindest eine Rezirkulationspumpe (14) eine Vorpumpe bzw. eine erste Stufe für eine nachgeschaltete Lösungskreispumpe (7) ist.

5. Sorptionswärmewandleranlage nach einem der vorhergehenden Ansprüche,
dadurch gekennzeichnet,
daß zumindest eine Rezirkulationspumpe (14) gleichzeitig eine Lösungskreispumpe (7) ist.

6. Sorptionswärmewandleranlage nach einem der vorhergehenden Ansprüche,
dadurch gekennzeichnet,
daß die Leitung für warme bzw. kalte Lösung aus einem Lösungskreislauf (12 bzw. 42) mit dem Eingang des Lösungsmittelkühlers (13) bzw. des Absorptionswärmetauschers (31) verbunden ist.

7. Sorptionswärmewandleranlage nach einem der vorhergehenden Ansprüche,
dadurch gekennzeichnet,
daß die zumindest eine Rezirkulationspumpe (14 bzw. 44) und/oder zumindest einer der Lösungsmittelkühler (13,16 bzw. 43,46) eine Steueranordnung zur Einstellung des Lösungsstromes durch den Rezirkulationskreis und damit des Wärmeübergangs im Absorptionswärmetauscher (3 bzw. 31) bildet.

8. Sorptionswärmewandleranlage nach einem der vorhergehenden Ansprüche,
dadurch gekennzeichnet,
daß durch Einstellung des Lösungsstromes in wenigestens einem der Rezirkulationskreise (13,16, 14, 18, 20 bzw. 43,46, 44, 48, 50) die Leistung der Anlage einstellbar ist.

9. Sorptionswärmewandleranlage nach einem der vorhergehenden Ansprüche,
dadurch gekennzeichnet,
daß zumindest ein Verdampfer (2) und/oder ein Generator (4) und/oder ein Desorber (32) überflutete Wärmetauscher sind.

10. Sorptionswärmewandleranlage nach einem der vorhergehenden Ansprüche,
dadurch gekennzeichnet,
daß in zumindest einem Absorptionswärmetauscher (3 bzw. 31) wärmeübergangssteigernde Additive enthalten sind.

11. Sorptionswärmewandleranlage nach einem der vorhergehenden Ansprüche,
dadurch gekennzeichnet,
daß in der Sorptionswärmewandleranlage salzhaltige, flüssige Absorptionsmittel enthalten sind.

12. Sorptionswärmewandleranlage nach einem der vorhergehenden Ansprüche,
dadurch gekennzeichnet,
daß der/die Wärmetauscher zumindest eines Kondensators (1) und /oder zumindest eines Absorptionswärmetauschers (3 bzw. 31) und/oder zumindest eines Lösungskühlers (13,16 bzw. 43, 46) technisch für die Kühlung mit Luft ausgebildet ist/sind.

13. Sorptionswärmewandleranlage nach einem der vorhergehenden Ansprüche,
dadurch gekennzeichnet,
daß die Kühlmediumanschlüsse von zumindest einem Kondensator (1) und /oder zumindest einem Absorptionswärmetauscher (3 bzw. 31) und/oder zumindest einem Lösungskühler (13,16 bzw. 43,46) mit den Kühlmediumanschlüssen von zumindest einem Trockenrückkühlwerk verbunden sind.

14. Sorptionswärmewandleranlage nach einem der vorhergehenden Ansprüche,
dadurch gekennzeichnet,
daß die Anlage eine Sorptionskälteanlage zur Eiserzeugung und/oder Solekühlung darstellt.

15. Sorptionswärmewandleranlage nach einem der vorhergehenden Ansprüche,
dadurch gekennzeichnet,
daß die Rezirkulationpumpe (14 bzw.44) als Flüssigkeitsstrahlpumpe (14 bzw. 44) ausgebildet ist, wobei der Treibmittelanschluss mit dem Lösungskreis (12 bzw. 42), der Saugstutzen mit dem Rezirkulationskreis, und der Gemischstutzen mit dem Eingang des Lösungskühlers (13 bzw. 43) oder des Absorptionswärmetauschers (3 bzw. 31) eine Verbindung aufweisen.

## Claims

1. Single- or multistage sorption heat conversion system, such as heat pump, refrigeration system or heat transformer, having at least one absorber (3) and/or resorber (31) constructed as cooled absorption heat exchangers,
characterized in that
a recirculation circuit having at least one solution cooler (13, 16 or 43, 46) for undercooling the solution in the recirculation circuit and having at least one pump (14 or 44) is formed around at least one of the cooled absorption heat exchangers (3 or 31).

2. Sorption heat conversion system according to claim 1,
characterized in that
at least one recirculation pump (14 or 44) is connected between the outlet of the absorption heat exchanger (3 or 31) and the inlet of the solution cooler (13 or 43).

3. Sorption heat conversion system according to one of the preceding claims,
characterized in that
at least one recirculation pump (14 or 44) is connected between the inlet of the absorption heat exchanger (3 or 31) and the outlet of the solution cooler (16 or 46).

4. Sorption heat conversion system according to one of the preceding claims,
characterized in that
at least one recirculation pump (14) is a feed pump or a first stage for a downstream solution circuit pump (7).

5. Sorption heat conversion system according to one of the preceding claims,
characterized in that
at least one recirculation pump (14) is at the same time a solution circuit pump (7).

6. Sorption heat conversion system according to one of the preceding claims,
characterized in that
the line for hot or cold solution from a solution circuit (12 or 42) is connected to the inlet of the solvent cooler (13) or of the absorption heat exchanger (31).

7. Sorption heat conversion system according to one of the preceding claims,
characterized in that
the at least one recirculation pump (14 or 44) and/or at least one of the solvent coolers (13, 16 or 43, 46) is a control arrangement for adjusting the flow of solution through the recirculation circuits, and thus the heat transfer within the absorption heat exchanger (3 or 31).

8. Sorption heat conversion system according to one of the preceding claims,
characterized in that
the performance of the system may be adjusted by adjusting the flow of solution in at least one of the recirculation circuits (13, 16, 14, 18, 20 or 43, 46, 44, 48, 50).

9. Sorption heat conversion system according to one of the preceding claims,
characterized in that
at least one evaporator (2) and/or one generator (4) and/or one desorber (32) are flooded heat exchangers.

10. Sorption heat conversion system according to one of the preceding claims,
characterized in that
additives which increase heat transfer are contained in at least one absorption heat exchanger (3 or 31).

11. Sorption heat conversion system according to one of the preceding claims,
characterized in that
salt-containing liquid absorption media are present in the sorption heat conversion system.

12. Sorption heat conversion system according to one of the preceding claims,
characterized in that the heat exchanger(s) of at least one condenser (1) and/or of at least one absorption heat exchanger (3 or 31) and/or of at least one solution cooler (13, 16 or 43, 46) is/are technically constructed for cooling with air.

13. Sorption heat conversion system according to one of the preceding claims,
characterized in that
the cooling medium connections of at least one condenser (1) and/or at least one absorption heat exchanger (3 or 31) and/or at least one solution cooler (13, 16 or 43, 46) are connected to the cooling medium connections of at least one dry recooler.

14. Sorption heat conversion system according to one of the preceding claims,
characterized in that
the system is a sorption refrigeration system for ice production and/or brine cooling.

15. Sorption heat conversion system according to one of the preceding claims,
characterized in that
the recirculation pump (14 or 44) is constructed as a liquid-jet pump (14 or 44), the motive-medium connection having a connection to the solution circuit (12 or 42), the suction nozzle having a connection to the recirculation circuit, and the mixture nozzle having a connection to the inlet of the solution cooler (13 or 43) or the absorption heat exchanger (3 or 31).

## Revendications

1. Installation de conversion thermique par sorption à un ou plusieurs étages, telle que, par exemple, pompe à chaleur, installation frigorifique ou transformateur thermique, comportant au moins un absorbeur (3) et/ou un résorbeur (31), conçus en échangeurs thermiques par absorption refroidis,
caractérisée en ce que,
autour d'au moins l'un des échangeurs thermiques par absorption refroidis (3 ou 31), il est formé un circuit de recirculation comportant au moins un refroidisseur de solution (13, 16 ou 43, 46), destiné à assurer un surrefroidissement de la solution dans le circuit de recirculation, et comportant au moins une pompe (14 ou 44).

2. Installation de conversion thermique par sorption selon la revendication 1,
caractérisée en ce que,
au moins une pompe de recirculation (14 ou 44) est montée entre la sortie de l'échangeur thermique par absorption (3 ou 31) et l'entrée du refroidisseur de solution (13 ou 43).

3. Installation de conversion thermique par sorption selon l'une des revendications précédentes,
caractérisée en ce que,
au moins une pompe de recirculation (14 ou 44) est montée entre l'entrée de l'échangeur thermique par absorption (3 ou 31) et la sortie du refroidisseur de solution (16 ou 46).

4. Installation de conversion thermique par sorption selon l'une des revendications précédentes,
caractérisée en ce que,
au moins une pompe de recirculation (14) est une pompe préliminaire ou un premier étage pour une pompe (7) du circuit de solution, montée en aval d'elle.

5. Installation de conversion thermique par sorption selon l'une des revendications précédentes,
caractérisée en ce que,
au moins une pompe de recirculation (14) est en même temps une pompe (7) du circuit de solution.

6. Installation de conversion thermique par sorption selon l'une des revendications précédentes,
caractérisée en ce que,
la conduite pour de la solution chaude ou froide issue d'un circuit fermé de solution (12 ou 42) est reliée à l'entrée du refroidisseur de solution (13) ou de l'échangeur thermique par absorption (31).

7. Installation de conversion thermique par sorption selon l'une des revendications précédentes,
caractérisée en ce que,
au moins une pompe de recirculation (14 ou 44) et/ou au moins l'un des refroidisseurs de solution (13, 16 ou 43, 46) forme un dispositif de commande pour le réglage du débit d'écoulement de la solution à travers le circuit de recirculation et, par conséquent, du transfert thermique dans l'échangeur thermique par absorption (3 ou 31).

8. Installation de conversion thermique par sorption selon l'une des revendications précédentes,
caractérisée en ce que,
la puissance de l'installation est réglable par réglage du débit d'écoulement de la solution dans au moins l'un des circuits de recirculation (13, 16, 14, 18, 20 ou 43, 46, 44, 48, 50).

9. Installation de conversion thermique par sorption selon l'une des revendications précédentes,
caractérisée en ce que,
au moins un évaporateur (2) et/ou un générateur (4) et/ou un désorbeur (32) sont des échangeurs thermiques à submersion.

10. Installation de conversion thermique par sorption selon l'une des revendications précédentes,
caractérisée en ce que,
des additifs faisant croître le transfert thermique sont contenus dans au moins un échangeur thermique par absorption (3 ou 31).

11. Installation de conversion thermique par sorption selon l'une des revendications précédentes,
caractérisée en ce que,
des agents d'absorption liquides et salins sont contenus dans l'installation de conversion thermique par sorption.

12. Installation de conversion thermique par sorption selon l'une des revendications précédentes,
caractérisée en ce que,
le/les échangeur(s) thermique(s) d'au moins un condenseur (1) et/ou d'au moins un échangeur thermique par absorption (3 ou 31) et/ou d'au moins un refroidisseur de solution (13, 16 ou 43, 46) est/sont aménagé(s) techniquement pour le refroidissement avec de l'air.

13. Installation de conversion thermique par sorption selon l'une des revendications précédentes,
caractérisée en ce que,
les raccords pour le fluide de refroidissement d'au moins un condenseur (1) et/ou d'au moins un échangeur thermique par absorption (3 ou 31) et/ou d'au moins un refroidisseur de solution (13, 16 ou 43, 46) sont reliés aux raccords pour le fluide de refroidissement d'au moins un groupe de refroidissement au niveau initial par séchage.

14. Installation de conversion thermique par sorption selon l'une des revendications précédentes,
caractérisée en ce que,
l'installation constitue une installation frigorifique par sorption pour la production de glace et/ou le refroidissement d'eau salée.

15. Installation de conversion thermique par sorption selon l'une des revendications précédentes,
caractérisée en ce que,
la pompe de recirculation (14 ou 44) est conçue sous forme d'une pompe à jet de liquide (14 ou 44), le raccord pour le fluide moteur présentant alors une connexion avec le circuit de solution (12 ou 42), la tubulure d'aspiration avec le circuit de recirculation et la tubulure de mélange avec l'entrée du refroidisseur de solution (13 ou 43) ou de l'échangeur thermique par absorption (3 ou 31).
